# EUROPEAN PATENT SPECIFICATION

(11) **EP 4 452 835 B1**
(45) Date of publication and mention of the grant of the patent: **10.12.2025**
(21) Application number: 22843710.9
(22) Date of filing: 21.12.2022
(51) Int. Cl.: C01B 15/023

(54) **PROCESS FOR THE PRODUCTION OF HYDROGEN PEROXIDE**
VERFAHREN ZUR HERSTELLUNG VON WASSERSTOFFPEROXID
PROCÉDÉ DE PRODUCTION DE PEROXYDE D'HYDROGÈNE

(30) Priority: 23.12.2021 FR 2114384
(43) Date of publication of application: 30.10.2024
(73) Proprietor: ARKEMA FRANCE, 92800 Puteaux (FR)
(72) Inventor: BABA-AHMED, Abdelatif, 69492 Cedex PIERRE-BENITE (FR); ANDRE, David, 69491 Cedex PIERRE-BENITE (FR); BOSSOUTROT, Jean-Michel, 69491 Cedex PIERRE-BENITE (FR); SAGE, Jean-Marc, 69491 Cedex PIERRE-BENITE (FR); WENDLINGER, Laurent, 69491 Cedex PIERRE-BENITE (FR)
(74) Representative: Arkema Patent
(86) International application number: PCT/EP2022/087347
(87) International publication number: WO 2023/118369

(56) References cited:
- GB-A- 850 567
- GB-A- 872 290
- US-A- 3 962 288
- US-A1- 2008 181 842

## Description

### Technical field

The present invention relates to a process for the production of hydrogen peroxide and to the use of a specific solvent for the production of hydrogen peroxide.

### Technical background

The most common process for the production of hydrogen peroxide is the anthraquinone process. During this process (also called cyclic Auto-Oxidation process (AO)), a quinone is dissolved in a suitable organic solvent mixture, a so-called working solution, and is hydrogenated to form the corresponding hydroquinone. The hydroquinone is then oxidized back to quinone with oxygen (usually air) with simultaneous formation of hydrogen peroxide, which then can be extracted with water while the quinone is returned with the working solution to the hydrogenation step.

The anthraquinone process is described extensively in the literature, for example in Kirk-Othmer, "Encyclopedia of Chemical Technology", 49 Ed., 1993, Vol. 13, pp. 961-995.

In order for the process to work properly, it is necessary to use a solvent mixture for the working solution in which both quinones and hydroquinones are soluble. Therefore, the solvent mixture in the working solution normally comprises one or more quinone solvents and one or more hydroquinone solvents. Quinones dissolve readily in nonpolar, aromatic solvents while hydroquinones dissolve well in polar solvents.

For quinones, various aromatic solvents are proposed in the literature like benzene, xylene (US 2158525), trimethylbenzene (GB 747190), tetramethylebenzene (WO 2001/098204), anisole (GB 872 290 A, US 3 962 288 A, GB 850 567 A, US 2008/181842 A1) and mixtures of polyalkylated benzenes (US 3328128, EP 3342750, FR 1406409).

In addition, certain nitrogen containing compounds are also known as solvents for the hydroquinones. The use of carboxylic acid amides (US 4046868), substituted ureas (US 3767778), alkylsubstituted pyrrolidones (US 4394369) and alkyl substituted caprolactames (EP 0286610) are disclosed in the literature.

The aromatic solvents proposed in the literature are flammable and produce vapors, which are explosive when mixed with oxygen or air (involving serious fire and explosion hazards in a large-scale commercial plant).

There is still a need for a solvent used for the production of hydrogen peroxide that makes it possible to reduce process costs, and increase safety and productivity of the process.

### Summary of the invention

It is a first object of the invention to provide a process for the production of hydrogen peroxide by the cyclic Auto-Oxidation process, also called AO-process comprising the two alternate steps of :
- hydrogenation of a working solution in the presence of a catalyst, wherein said working solution contains at least one quinone dissolved in at least one organic solvent, to obtain at least one corresponding hydroquinone; and
- oxidation of said at least one hydroquinone;
characterized in that the organic solvent has the formula (I):

(I) R¹-O-R²

wherein:
- R¹ is an aryl group comprising from 6 to 18 carbon atoms; and
- R² is an alkyl group comprising from 1 to 8 carbon atoms,
when R² is a methyl group, R¹ is different from phenyl.

According to some embodiments, the organic solvent has a specific gravity equal to or lower than 0.95.

According to some embodiments, the organic solvent has a vapor pressure equal to or lower than 450 Pa at 20°C.

According to some embodiments, the organic solvent has a water solubility equal to or lower than 200 mg/kg.

According to some embodiments, the organic solvent of formula (I) has a flashpoint higher than 60°C.

According to some embodiments, R¹-O- derives from a phenol chosen from o-cresol, m-cresol, p-cresol, o-ethylphenol, m-ethylphenol, p-ethylphenol, o-propylphenol, m-propylphenol, p-propylphenol, 2,6-dimethylphenol, 2,4-dimethylphenol, 3,4-dimethylphenol, or from a naphthol chosen from 1-naphthol and 2-naphthol, and/or wherein R² is a group chosen from methyl, ethyl, n-propyl, i-propyl, n- butyl, i- butyl, t-butyl, n-pentyl, neopentyl and n-hexyl.

According to some embodiments, the working solution consists of the organic solvent of formula (I) and the quinone.

According to some embodiments, the quinone is an anthraquinone, more preferably an alkylanthraquinone and/or a tetrahydro alkylanthraquinone, preferably chosen from 2-ethylanthraquinone, 2-isopropylanthraquinone, 2-n-butylanthraquinone, 2-sec-butylanthraquinone, 2-tert-butylanthraquinone, 2-amylanthraquinone, 2-sec amy1anthraquinone, 2-tert-amylanthraquinone or mixtures thereof.

According to some embodiments, the working solution further comprises an additional solvent chosen from alkyl phosphates, tetraalkyl ureas, alkylcyclohexanol esters, high boiling alcohols, preferably with 8 to 9 carbon atoms, and mixtures thereof.

The invention further relates to the use of an organic solvent for solving a quinone in a working solution for hydrogen peroxide production, wherein the organic solvent has the formula (I):

(I) R¹-O-R²

wherein:
- R¹ is an aryl group comprising from 6 to 18 carbon atoms; and
- R² is an alkyl group comprising from 1 to 8 carbon atoms,
when R² is a methyl group, R¹ is different from phenyl.

The present invention enables to meet the abovementioned need. In particular, the invention provides a solvent used for the production of hydrogen peroxide that makes it possible to reduce process costs, and increase safety and productivity of the process.

This is achieved with the organic solvent of formula (I) according to the present invention. More particularly, the quinones have an increased solubility in this solvent which makes it possible to implement the process at a lower temperature, therefore reduce the costs related to the production of hydrogen peroxide and the risks related to the flammability of the solvent. In addition, at increased solubility, reaction rates may increase which makes it possible to increase the productivity of the process.

In addition, the presence of an oxygen atom in the organic solvent makes it possible to increase the polarity of the solvent, which also gives a substantially improved hydroquinone solubility. At an increased solubility of hydroquinones the reaction rates also increase and so the plant productivity may increase.

Furthermore, the fact that the organic solvent according to the invention preferably has a flashpoint higher than 60°C, makes it possible to limit the risk of fire related to the flammability of the solvent.

Advantageously, the fact that the organic solvent according to the invention has a specific gravity equal to or lower than 0.95 makes it possible to facilitate the separation of the solvent from water. This is useful during the step of extracting hydrogen peroxide from the working solution.

Again advantageously, the organic solvent according to the present invention may have a vapor pressure equal to or lower than 450 Pa at 20°C, which allows to maintain the vapors in the reaction vessels at all times below explosive limits even when the reaction is conducted at elevated temperatures.

Again advantageously, the organic solvent according to the present invention may have a water solubility equal to or lower than 200 mg/kg. Such decreased water solubility for the organic solvent makes it possible to reduce the loss of solvent notably during the extraction step of the process (wherein the oxidized working solution is treated with water so as to extract hydrogen peroxide). In addition, such decreased water solubility for the organic solvent makes it possible to provide a crude hydrogen peroxide solution of higher purity.

### Detailed description

The invention will now be described in more detail without limitation in the following description.

### Working solution

The working solution according to the invention comprises at least one quinone in at least one organic solvent. The organic solvent is used to solubilize the quinone.

The at least one organic solvent has the following formula:

(I) R¹-O-R²

wherein:
- R¹ is an aryl group comprising from 6 to 18 carbon atoms; and
- R² is an alkyl group comprising from 1 to 8 carbon atoms.

According to some embodiments R¹ may be a substituted or a non-substituted aryl group.

Preferably R¹ is an aryl group comprising from 6 to 12 carbon atoms.

R¹ may comprise one or more heteroatoms chosen from oxygen, nitrogen, and a halogen chosen from -F, -Cl, -Br and -I. Preferably R¹ may comprise an oxygen atom.

In case R¹ is a non-substituted aryl group, it may be chosen from a phenyl group or a naphthyl group.

In case R¹ is a substituted aryl group, it may comprise one or more substituents.

Preferably, R¹ comprises one or two substituents.

The different substituents may be present at an ortho-, meta-, or para-position relative to the position of the oxygen atom of the organic solvent of formula (I) linked to the R¹ group.

Such substituents may be chosen from an alkyl group, linear or branched, comprising from 1 to 4 carbon atoms, a hydroxy group, an amine, or a halogen chosen from -F, -Cl, -Br and -I.

The alkyl group can be chosen from a methyl group, an ethyl group, a n-propyl group, a i-propyl group, a n-butyl group, a i-butyl group and a t-butyl group.

Preferably, such substituent may be an alkyl group, more preferably chosen from a methyl group, an ethyl group or a propyl group.

According to some preferred embodiments, R¹ comprises a single substituent which is preferably an alkyl group more preferably chosen from a methyl group, an ethyl group or a propyl group.

According to other preferred embodiments, R¹ comprises two substituents: two alkyl groups preferably chosen from a methyl group, an ethyl group or a propyl group.

According to preferred embodiments, R¹-O- may derive from a phenol chosen from o-cresol, m-cresol, p-cresol, o-ethylphenol, m-ethylphenol, p-ethylphenol, o-propylphenol, m-propylphenol, p-propylphenol, 2,6-dimethylphenol, 2,4-dimethylphenol, 3,4-dimethylphenol, or from a naphthol chosen from 1-naphthol and 2-naphthol.

As mentioned above, R² is an alkyl group comprising from 1 to 8 carbon atoms, preferably from 2 to 8 carbon atoms, and more preferably from 2 to 6 carbon atoms. R² may be linear or branched.

According to preferred embodiments, R² may be chosen from methyl, ethyl, n-propyl, i-propyl, n- butyl, i- butyl, t-butyl, n-pentyl, neopentyl and n-hexyl. Preferably, R² may be chosen from methyl, ethyl and propyl.

When R² is a methyl group, R¹ is different from phenyl.

According to preferred embodiments, the organic solvent according to the present invention may have a flash point higher than 60°C, preferably higher than 62.5°C and more preferably higher than 65°C. Flash point can be determined by closed-cup apparatus according to ASTM-D3278.

The organic solvent according to the present invention may have a specific gravity equal to or lower than 0.95, and preferably equal to or lower than 0.94. According to preferred embodiments, the organic solvent according to the present invention may have a specific gravity from 0.89 to 0.95, and preferably from 0.90 to 0.94. Specific gravity can be determined by means of a hydrometer according to ASTM-D891.

Furthermore, the solvent of formula (I) may have a vapor pressure equal to or lower than 450 Pa, preferably equal to or lower than 400 Pa, and more preferably equal to or lower 350 Pa at 20°C. For example, the solvent of formula (I) may have a vapor pressure equal to or lower than 450 Pa, or equal to or lower than 400 Pa, or equal to or lower than 350 Pa, or equal to or lower than 300 Pa, or equal to or lower than 250 Pa, or equal to or lower than 200 Pa, or equal to or lower than 250 Pa, or equal to or lower than 200 Pa, or equal to or lower than 150 Pa, or equal to or lower than 100 Pa, at 20°C. Vapor pressure can be determined by ebulliometry according to ASTM-E1719.

According to some preferred embodiments, the organic solvent is not soluble (or essentially not soluble) in water, and preferably has a water solubility equal to or lower than 200 mg/kg, preferably equal to or lower than 190 mg/kg, and more preferably equal to or lower than 180 kg/kg. Water solubility can be determined by coulometric Karl Fischer titration according to ASTM-D6304.

According to some preferred embodiments, the organic solvent according to the present invention may be chosen from benzyl amine derivatives, toluidine derivatives, lutidine derivatives, indole derivatives, isoindole derivatives, indolizine derivatives, pyridine derivatives, aniline derivatives, phenethylamine derivatives, phenylethylamine derivatives, xylidine derivatives, pyrrole derivatives, tropidine derivatives, aminoindane derivatives, quinoline derivatives, isoquinoline derivatives, pyrrolidine derivatives, actinide derivatives, benzyl amine derivatives, adamantine derivatives, piperidine derivatives, xylopropamine derivatives and their combinations.

According to some preferred embodiments, the organic solvent according to the present invention may be chosen from anisole derivatives such as 1-ethyl-4-methoxybenzene, 2,6-dimethylanisole, cresol derivatives, xylenol derivatives, phenyl ether derivatives such as phenylpropylether and their combinations.

The organic solvent of formula (I) may be present in the working solution at an amount from 70 to 99.9 weight %, and preferably from 80 to 99 weight %. For example, the organic solvent of formula (I) may be present in the working solution at an amount from 70 to 75 weight %; or from 75 to 80 weight %; or from 80 to 85 weight %; or from 85 to 90 weight %; or from 90 to 95 weight %; or from 95 to 99.9 weight %.

According to some embodiments, the working solution comprises a single organic solvent of formula (I).

Alternatively, the working solution comprises a mixture of organic solvents of formula (I) (for example two or three or four organic solvents of formula (I)).

In addition, the working solution further comprises a quinone which is preferably an anthraquinone and more preferably chosen from an alkylanthraquinone or a tetrahydro alkylanthraquinone which is solubilized in the organic solvent of formula (I). By *"quinone"* or *"quinone derivatives"* is meant a class of organic compounds having a benzene nucleus on which two hydrogen atoms are replaced by two oxygen atoms forming two carbonyl bonds.

For the sake of simplicity, the term *"alkylanthraquinone"* used in the description below will include both alkylanthraquinones and tetrahydro alkylanthraquinones.

Preferred alkyl substituents for the alkylanthraquinones include amyl such as 2-tert-amyl or 2-iso-sec-amyl, ethyl, isopropyl, n-butyl, sec-butyl, tert-butyl and 2-hexenyl, and it is particularly preferred that at least ethyl substituted anthraquinones and/or tetrahydro anthraquinones are included. Thus, preferred alkylanthraquinones include 2-ethylanthraquinone, 2-isopropylanthraquinone, 2-n-butylanthraquinone, 2-sec butylanthraquinone, 2-tert-butylanthraquinone, 2-amylanthraquinone, 2-sec amylanthraquinone, 2-tert-amylanthraquinone or mixtures thereof as well as the 2-alkyl-5,6,7,8-tetrahydroanthraquinones and their mixtures with the corresponding 2-alkylanthraquinones. According to a preferred embodiment, the alkylanthraquinone may be 2 ethyl anthraquinone.

The quinone may be present in the working solution at an amount from 0.1 to 30 weight %, and preferably from 1 to 20 weight %. For example, the quinone may be present in the working solution at an amount from 0.1 to 1 weight %; or from 1 to 5 weight %; or from 5 to 10 weight %; or from 10 to 15 weight %; or from 15 to 20 weight %; or from 20 to 25 weight %; or from 25 to 30 weight %.

According to some embodiments, the working solution comprises a single quinone.

Alternatively, the working solution comprises a mixture of quinones (for example two or three or four quinones).

The working solution according to the invention may further comprise an additional solvent different from the organic solvent of formula (I). This additional solvent may be a solvent for solubilizing the quinone or a solvent for solubilizing the hydroquinone (formed after hydrogenation of the quinone). One or more additional solvents can be present in the working solution. For example, a first additional solvent for solubilizing the quinone and a second additional solvent for solubilizing the hydroquinone may be present in the working solution.

The additional solvent may be present in the working solution in a mass ratio relative to the organic solvent of formula (I) within the range of 0:1 to 3:1, preferably in the range of 0:1 to 2:1 and more preferably in the range from 0:1 to 1:1.

Alternatively, the working solution according to the invention is devoid of any additional solvent. For example, the working solution may consist (or essentially consist) of the organic solvent of formula (I) and the quinone.

In case the additional solvent is for solubilizing the quinone (quinone solvent), such solvent may be a non-polar hydrocarbon preferably selected from aromatic, aliphatic or naphthenic hydrocarbons, of which aromatic hydrocarbons are most preferred. Preferred solvents of this type include benzene, alkylated or polyalkylated benzenes such as tert-butylbenzene or trimethyl benzene, alkylated toluene or naphthalene such as tert-butyltoluene or methylnaphthalene. The use of a commercial mixture of aromatics sold under the name Aromatic Solvent 150 (also known as solvent C10) is possible. Aromatic Solvent 150 has CAS number 64742-94-5 and is manufactured by distillation of aromatic streams that are derived from petroleum products. It is also known by other brand names as Solvent Naphtha 150, Solvesso 150, Caromax 150, Shellsol A150, and Heavy Aromatic Solvent Naphtha 150.

In case the additional solvent is for solubilizing the hydroquinone (hydroquinone solvent), such solvent may be a polar organic solvent preferably non-soluble in water. Such solvent may be chosen from alcohols, ureas, amides, caprolactams, esters, phosphorus containing substances and pyrrolidones, and may include alkyl phosphates (e.g. trioctyl phosphate), alkyl phosphonates, alkylcyclohexanol esters (e.g. 2-methyl-cyclohexyl acetate), N, N-dialkyl carbonamides, tetraalkyl ureas (e.g. tetrabutyl urea), N-alkyl-2-pyrrolidones and high boiling alcohols, preferably with 8 to 9 carbon atoms (e. g. di-isobutyl carbinol). Preferred hydroquinone solvents are selected from alkyl phosphates, tetraalkyl ureas, alkylcyclohexanol esters and high boiling alcohols.

### Process for the production of hydrogen peroxide

The invention relates to a process for the production of hydrogen peroxide by the cyclic Auto-Oxidation process, also called AO-process. Such process comprises alternate steps of hydrogenation and oxidation of the working solution described above.

The hydrogenation step may be performed by contacting the working solution with hydrogen gas. During this step, the quinone is hydrogenated to form a corresponding hydroquinone. This step is carried out in the presence of a catalyst. Such catalyst may, for example, be a metal selected from nickel, palladium, platinum, rhodium, ruthenium, gold, silver, or mixtures thereof. Preferred metals are palladium, platinum and gold, of which palladium or mixtures comprising at least 50 weight % palladium are particularly preferred.

According to some embodiments, the catalyst may be in free form, e.g. palladium black suspended in the working solution, or be deposited on a solid support such as particles used in the form of a slurry or a fixed bed.

According to other preferred embodiments, the catalyst may be in the form of an active metal on a monolithic support, for example, as described in US patents 4552748 and 5063043.

Preferred support materials may be selected from alumina, silica, aluminosilicates (silica-alumina), activated magnesia, titanium dioxide, carbon black, activated carbon, zeolites, ion exchange resins, polymer substrates, metal substrates, alkaline earth metal carbonate, or the like or combinations of these. The percentage concentration of the metal in the supported catalysts can range from 0.1 to 50 weight % but preferably is in the range from 0.2 to 5 weight %.

The hydrogenation step may be carried out at a temperature from 20 to 120°C, and preferably from 30 to 90°C.

In addition, such step may be carried out at an absolute pressure from 100 to 1200 kPa, and preferably from 150 to about 600 kPa.

Preferably, the hydrogenation step may be carried out in either a slurry reactor or a fixed-bed reactor.

After the hydrogenation step, the working solution (now comprising the hydroquinone) is submitted to an oxidation step. During this step, the hydroquinone is transformed in the quinone while hydrogen peroxide is produced. Such step is carried out in the presence of oxygen. As a source of oxygen molecular oxygen, oxygen-enriched gas, air or any other suitable oxygen-containing compound making it possible to produce hydrogen peroxide and oxidize the hydroquinone can be used.

This step may be carried out for example in a bubble reactor, through which the source of oxygen and the working solution may be passed co-currently or counter-currently. The bubble reactor can be free from internal devices or preferably contain internal devices in the form of packing or sieve plates.

The oxidation step may be carried out at a temperature from 20 to 100°C, and preferably from 40 to 75°C.

In addition, such step may be carried out at an absolute pressure from 50 to 1500 kPa, and preferably from 100 to about 700 kPa.

The oxidation step is preferably performed with an excess of oxygen, so that preferably over 90%, particularly over 95%, of the hydroquinone contained in the working solution are converted to the quinone form.

At the end of this step, the working solution may have a concentration in hydrogen peroxide from 0.5 to 2.5 weight % and preferably from 0.8 to 1.9 weight %. For example, the working solution may have a concentration in hydrogen peroxide from 0.5 to 1 weight %; or from 1 to 1.5 weight %; or from 1.5 to 2 weight %; or from 2 to 2.5 weight %.

After this step, the process according to the present invention may comprise a step of recovering the hydrogen peroxide in a crude hydrogen peroxide solution. This step may be carried out by extracting the working solution resulting after the oxidation step with water. This step may be carried out in sieve-tray extraction columns, packed columns, pulsed packed columns, and liquid-liquid centrifugal extractors.

The extraction efficiency is strongly influenced by the distribution coefficient, which depends on the composition of the working solution (e.g., type and concentration of solvents and accumulation of degraded compounds). Efficient extraction may deplete the working solution of more than 95% of its hydrogen peroxide.

At the end of this step, the crude hydrogen peroxide solution may have a concentration in hydrogen peroxide from 25 to 55 weight % and preferably from 30 to 50 weight %.

The solution resulting after the recovery of hydrogen peroxide (and comprising the organic solvent of formula (I) and the quinone) may then be reused in the hydrogenation step. However, it is preferable, prior to reusing said solution in the hydrogenation step, to adjust its water content. Because the solubility of water in the working solution depends on temperature, its moisture content can be adjusted by carrying out the extraction step at temperatures compatible with the extraction performance, separating the dispersed water, and then increasing the temperature of the working solution before it reaches the hydrogenation step. The working solution may also be dried using the off-gas (discharged gas) from the oxidation step. Alternatively, the working solution leaving the extraction column may be initially freed from entrained water in a water separator and then passed through aqueous potassium carbonate solution for drying.

The fact that the organic solvent according to the invention has a water solubility equal to or lower than 200 mg/kg makes it possible to reduce the loss of organic solvent during the extraction. In addition, such decreased water solubility for the organic solvent makes it possible to provide a crude hydrogen peroxide solution of higher purity.

On the one hand, after the extraction step, the crude hydrogen peroxide solution may be treated (washed) to remove impurities such as entrained droplets of working solution and dissolved organics. This treatment may consist, for example, in coalescence, liquid-liquid extraction, treatment with resins or any other treatment, well known in the chemical industry. The purified crude product may then be fed to a distillation unit, where it may be further purified and concentrated to the usual commercial concentration (for example from 50 to 70 weight % of hydrogen peroxide).

On the other hand, the working solution after the extraction step may be recycled into the hydrogenation step in order to continue the hydrogen peroxide production cycle. As degradation products are formed (from the quinone/hydroquinone compounds and from the solvents), the working solution should preferably be treated/regenerated to avoid a deterioration of the process performance. Numerous methods have been suggested for purifying the working solution and regenerating active quinone from the quinone degradation products. For example, treatment with alkaline substances (aqueous sodium hydroxide or potassium hydroxide solution, calcium hydroxide, ammonia, or amines), treatment with sodium aluminum silicates and extraction with active aluminum oxide. The working solution should preferably also be washed (normally with mildly acidic water) before being returned to the process.

### Examples

The following examples illustrate the invention without limiting it.

### Example 1

The solubility of 2-ethylanthraquinone (2-EAQ) was measured in four different solvents. Solvents A to C are according to the invention, while solvent D is a comparative solvent :
- Solvent A: 1-ethyl-4-methoxybenzene
- Solvent B: 2,6-dimethylanisole
- Solvent C: phenylpropylether
- Solvent D: 1,3,5-trimethylbenzene

Solubilities were determined by equilibrating the 2-ethylanthraquinone with the solvent in a glass flask shaken in a carefully temperature controlled atmosphere. Analysis of the samples was done by liquid chromatography. Reference mixtures were prepared for calibration.

The results are shown in TABLE 1. The solubility is measured at a temperature of 20°C.

**[TABLE 1]**

| Solvent | A | B | C | D |
|---|---|---|---|---|
| 2-EAQ solubility (g/kg of solvent) | 229 | 226 | 229 | 210 |

From the above table it can be concluded that the organic solvents according to the present invention (A to C) are better at solubilizing 2-EAQ compared to the comparative solvent D.

### Example 2

To find a good solvent for the cyclic Auto-Oxidation process to produce hydrogen peroxide means not only the consideration of the solubility of quinones but also the consideration of a number of other properties to obtain an optimal result.

Flash point can be determined by closed-cup apparatus according to ASTM-D3278.

Vapor pressure can be determined by ebulliometry according to ASTM-E1719.

Specific gravity can be determined by means of a hydrometer according to ASTMD891.

Water solubility can be determined by coulometric Karl Fischer titration according to ASTM-D6304.

**[TABLE 2]**

| Solvent | Flashpoint (°C) | Vapor Pressure (Pa) | Specific gravity | Water solubility (mg/kg) |
|---|---|---|---|---|
| A | 68-72 | 67 | 0.944 | 90 |
| B | 61-67 | 124 | 0.943 | 114 |
| C | 64-65 | 60 | 0.946 | 141 |
| Anisole (*) | 49-52 | 490 | 0.995 | 1728 |

| | | | | |
|---|---|---|---|---|
| [0101] (*) not according to the invention | | | | |

As is shown in above TABLE 2 the organic solvents according to the present invention (A to C) also have a number of other favorable properties like a flash point higher than 60°C, a vapor pressure equal to or lower than 450 Pa, a specific gravity equal to or lower than 0.95 and a water solubility equal to or lower than 200 mg/kg.

## Claims

1. A process for the production of hydrogen peroxide by the cyclic Auto-Oxydation -process comprising the two alternate steps of :
- hydrogenation of a working solution in the presence of a catalyst, wherein said working solution contains at least one quinone dissolved in at least one organic solvent, to obtain at least one corresponding hydroquinone; and
- oxidation of said at least one hydroquinone;
**characterized in that** the organic solvent has the formula (I):
(I) R¹-O-R²
wherein:
- R¹ is an aryl group comprising from 6 to 18 carbon atoms; and
- R² is an alkyl group comprising from 1 to 8 carbon atoms,
when R² is a methyl group, R¹ is different from phenyl.

2. The process according to claim 1, wherein the organic solvent has a specific gravity equal to or lower than 0.95.

3. The process according to any one of claims 1 or 2, wherein the organic solvent has a vapor pressure equal to or lower than 450 Pa at 20°C.

4. The process according to any one of claims 1 to 3, wherein the organic solvent has a water solubility equal to or lower than 200 mg/kg.

5. The process according to any one of claims 1 to 4, wherein the organic solvent of formula (I) has a flashpoint higher than 60°C.

6. The process according to any one of claims 1 to 5, wherein R¹-O-derives from a phenol chosen from o-cresol, m-cresol, p-cresol, o-ethylphenol, m-ethylphenol, p-ethylphenol, o-propylphenol, m-propylphenol, p-propylphenol, 2,6-dimethylphenol, 2,4-dimethylphenol, 3,4-dimethylphenol, or from a naphthol chosen from 1-naphthol and 2-naphthol, and/or wherein R² is a group chosen from methyl, ethyl, n-propyl, i-propyl, n- butyl, i- butyl, t-butyl, n-pentyl, neopentyl and n-hexyl.

7. The process according to any one of claims 1 to 6, wherein the quinone is an anthraquinone, more preferably an alkylanthraquinone and/or a tetrahydro alkylanthraquinone, preferably chosen from 2 ethylanthraquinone, 2-isopropylanthraquinone, 2-n-buty1anthraquinone, 2-sec-butylanthraquinone, 2-tert-buty1anthraquinone, 2-amylanthraquinone, 2-sec amylanthraquinone, 2-tert-amylanthraquinone or mixtures thereof.

8. The process according to any one of claims 1 to 7, wherein the working solution further comprises an additional solvent chosen from alkyl phosphates, tetraalkyl ureas, alkylcyclohexanol esters, alcohols with 8 to 9 carbon atoms, and mixtures thereof.

9. The process according to any one of claims 1 to 7, wherein the working solution consists of the organic solvent of formula (I) and the quinone.

10. Use of an organic solvent for solving a quinone in a working solution for hydrogen peroxide production, wherein the organic solvent has the formula (I):
(I) R¹-O-R²
wherein:
- R¹ is an aryl group comprising from 6 to 18 carbon atoms; and
- R² is an alkyl group comprising from 1 to 8 carbon atoms,
when R² is a methyl group, R¹ is different from phenyl.

## Patentansprüche

1. Verfahren zur Herstellung von Wasserstoffperoxid mit dem zyklischen Autoxidationsverfahren, umfassend die zwei abwechselnden Schritte:
- Hydrierung einer Arbeitslösung in Gegenwart eines Katalysators, wobei die Arbeitslösung mindestens ein in mindestens einem organischen Lösungsmittel gelöstes Chinon enthält, unter Erhalt mindestens eines entsprechenden Hydrochinons; und
- Oxidation des mindestens einen Hydrochinons;
**dadurch gekennzeichnet, dass** das organische Lösungsmittel die Formel (I) aufweist:
(I) R¹-O-R²
wobei:
- R¹ für eine Arylgruppe steht, die 6 bis 18 Kohlenstoffatome umfasst; und
- R² für eine Alkylgruppe steht, die 1 bis 8 Kohlenstoffatome umfasst,
wenn R² eine Methylgruppe ist, R¹ kein Phenyl ist.

2. Verfahren nach Anspruch 1, wobei das organische Lösungsmittel ein spezifisches Gewicht gleich oder kleiner 0,95 aufweist.

3. Verfahren nach einem der Ansprüche 1 oder 2, wobei das organische Lösungsmittel einen Dampfdruck gleich oder kleiner 450 Pa bei 20 °C aufweist.

4. Verfahren nach einem der Ansprüche 1 bis 3, wobei das organische Lösungsmittel eine Wasserlöslichkeit gleich oder kleiner 200 mg/kg aufweist.

5. Verfahren nach einem der Ansprüche 1 bis 4, wobei das organische Lösungsmittel der Formel (I) einen Flammpunkt oberhalb 60 °C aufweist.

6. Verfahren nach einem der Ansprüche 1 bis 5, wobei R¹-O- von einem Phenol, das aus o-Kresol, m-Kresol, p-Kresol, o-Ethylphenol, m-Ethylphenol, p-Ethylphenol, o-Propylphenol, m-Propylphenol, p-Propylphenol, 2,6-Dimethylphenol, 2,4-Dimethylphenol, 3,4-Dimethylphenol gewählt ist, oder von einem Naphthol, das aus 1-Naphthol und 2-Naphthol gewählt ist, stammt und/oder wobei R² für eine Gruppe steht, die aus Methyl, Ethyl, n-Propyl, i-Propyl, n-Butyl, i-Butyl, t-Butyl, n-Pentyl, Neopentyl und n-Hexyl gewählt ist.

7. Verfahren nach einem der Ansprüche 1 bis 6, es sich bei dem Chinon um ein Anthrachinon, bevorzugter ein Alkylanthrachinon und/oder ein Tetrahydroalkylanthrachinon handelt, das bevorzugt aus 2-Ethylanthrachinon, 2-Isopropylanthrachinon, 2-n-Butylanthrachinon, 2-sec-Butylanthrachinon, 2-tert-Butylanthrachinon, 2-Amylanthrachinon, 2-sec-Amylanthrachinon, 2-tert-Amylanthrachinon oder Gemischen davon gewählt ist.

8. Verfahren nach einem der Ansprüche 1 bis 7, wobei die Arbeitslösung ferner ein zusätzliches Lösungsmittel umfasst, das aus Alkylphosphaten, Tetraalkylharnstoffen, Alkylcyclohexanolestern, Alkoholen mit 8 bis 9 Kohlenstoffatomen und Gemischen davon gewählt ist.

9. Verfahren nach einem der Ansprüche 1 bis 7, wobei die Arbeitslösung aus dem organischen Lösungsmittel der Formel (I) und dem Chinon besteht.

10. Verwendung eines organischen Lösungsmittels zum Lösen eines Chinons in einer Arbeitslösung zur Wasserstoffperoxidherstellung, wobei das organische Lösungsmittel die Formel (I) aufweist:
(I) R¹-O-R²
wobei:
- R¹ für eine Arylgruppe steht, die 6 bis 18 Kohlenstoffatome umfasst; und
- R² für eine Alkylgruppe steht, die 1 bis 8 Kohlenstoffatome umfasst,
wenn R² eine Methylgruppe ist, R¹ kein Phenyl ist.

## Revendications

1. Procédé de production de peroxyde d'hydrogène par le procédé d'auto-oxydation cyclique comprenant les deux étapes alternées suivantes :
- hydrogénation d'une solution de travail en présence d'un catalyseur, dans lequel ladite solution de travail contient au moins une quinone dissoute dans au moins un solvant organique, pour obtenir au moins une hydroquinone correspondante ; et
- oxydation de ladite au moins une hydroquinone ;
**caractérisé en ce que** le solvant organique possède la formule (I) :
(I) R¹-O-R²
dans laquelle :
- R¹ est un groupe aryle comprenant de 6 à 18 atomes de carbone ; et
- R² est un groupe alkyle comprenant de 1 à 8 atomes de carbone,
lorsque R² est un groupe méthyle, R¹ est différent de phényle.

2. Procédé selon la revendication 1, dans lequel le solvant organique a une densité égale ou inférieure à 0,95.

3. Procédé selon l'une quelconque des revendications 1 ou 2, dans lequel le solvant organique a une pression de vapeur égale ou inférieure à 450 Pa à 20 °C.

4. Procédé selon l'une quelconque des revendications 1 à 3, dans lequel le solvant organique a une solubilité dans l'eau égale ou inférieure à 200 mg/kg.

5. Procédé selon l'une quelconque des revendications 1 à 4, dans lequel le solvant organique de formule (I) a un point d'éclair supérieur à 60 °C.

6. Procédé selon l'une quelconque des revendications 1 à 5, dans lequel R¹-O-dérive d'un phénol choisi parmi l'o-crésol, le m-crésol, le p-crésol, l'o-éthylphénol, le m-éthylphénol, le p-éthylphénol, le o-propylphénol, le m-propylphénol, le p-propylphénol, le 2,6-diméthylphénol, le 2,4-diméthylphénol, le 3,4-diméthylphénol, ou un naphtol choisi parmi le 1-naphtol et le 2-naphtol, et/ou dans lequel R² est un groupe choisi parmi méthyle, éthyle, n-propyle, i-propyle, n-butyle, i-butyle, t-butyle, n-pentyle, néopentyle et n-hexyle.

7. Procédé selon l'une quelconque des revendications 1 à 6, dans lequel la quinone est une anthraquinone, plus préférablement une alkylanthraquinone et/ou une tétrahydroalkylanthraquinone, de préférence choisie parmi la 2-éthylanthraquinone, la 2-isopropylanthraquinone, la 2-n-butylanthraquinone, la 2-sec-butylanthraquinone, la 2-tert-butylanthraquinone, la 2-amylanthraquinone, la 2-sec-amylanthraquinone, la 2-tert-amylanthraquinone ou leurs mélanges.

8. Procédé selon l'une quelconque des revendications 1 à 7, dans lequel la solution de travail comprend en outre un solvant supplémentaire choisi parmi les phosphates d'alkyle, les tétraalkylurées, les esters d'alkylcyclohexanol, les alcools comportant 8 à 9 atomes de carbone et leurs mélanges.

9. Procédé selon l'une quelconque des revendications 1 à 7, dans lequel la solution de travail est constituée du solvant organique de formule (I) et de la quinone.

10. Utilisation d'un solvant organique pour la dissolution d'une quinone dans une solution de travail pour la production de peroxyde d'hydrogène, dans laquelle le solvant organique a la formule (I) :
(I) R¹-O-R²
dans laquelle :
- R¹ est un groupe aryle comprenant de 6 à 18 atomes de carbone ; et
- R² est un groupe alkyle comprenant de 1 à 8 atomes de carbone,
lorsque R² est un groupe méthyle, R¹ est différent de phényle.
